Europäisches Patentamt

**European Patent Office**

Office européen des brevets

(11) Veröffentlichungsnummer: **0 043 491**
**B1**

(12) # EUROPÄISCHE PATENTSCHRIFT

(45) Veröffentlichungstag der Patentschrift:
17.09.86

(51) Int. Cl.⁴: **C 08 L 77/00, C 08 L 51/04**

(21) Anmeldenummer: **81104823.0**

(22) Anmeldetag: **23.06.81**

(54) Schlagzähe Polyamid-Formmassen.

(30) Priorität: **05.07.80 DE 3025606**

(43) Veröffentlichungstag der Anmeldung:
**13.01.82 Patentblatt 82/2**

(45) Bekanntmachung des Hinweises auf die Patenterteilung:
**17.09.86 Patentblatt 86/38**

(84) Benannte Vertragsstaaten:
**AT DE FR GB IT NL SE**

(56) Entgegenhaltungen:
**EP - A - 0 001 245**
**EP - A - 0 027 198**
**DE - B - 1 273 184**
**US - A - 3 267 175**

**Die Akte enthält technische Angaben, die nach dem
Eingang der Anmeldung eingereicht wurden und die
nicht in dieser Patentschrift enthalten sind.**

(73) Patentinhaber: **BAYER AG, Konzernverwaltung RP
Patentabteilung, D-5090 Leverkusen 1 Bayerwerk (DE)**

(72) Erfinder: **Nielinger, Werner, Dr., Bärenstrasse 21,
D-4150 Krefeld 1 (DE)**
Erfinder: **Lindner, Christian, Dr., Riehler Strasse 200,
D-5000 Köln 60 (DE)**
Erfinder: **Grigo, Ulrich, Dr., Michelsheide 9,
D-4152 Kempen 3 (DE)**
Erfinder: **Binsack, Rudolf, Dr., Bethelstrasse 4a,
D-4150 Krefeld 1 (DE)**
Erfinder: **Fahnler, Friedrich, Wimmersweg 60,
D-4150 Krefeld 1 (DE)**
Erfinder: **Brassat, Bert, Dr., Bethelstrasse 24,
D-4150 Krefeld 1 (DE)**

## Beschreibung

Die Erfindung betrifft thermoplastische Formmassen aus Polyamiden und Methyl(meth)acrylatgepfropften Polybutadienen mit verbesserter Schlag- und Bruchzähigkeit, sowie verbesserter Verarbeitbarkeit.

Formkörper aus teilkristallinen Polyamiden weisen im Trockenzustand eine für viele Anwendungen unzureichende Festigkeit auf. Es gibt eine Reihe von Möglichkeiten, die Zähigkeit zu verbessern. Im einfachsten Fall ist dies möglich durch Aufnahme von Wasser. Wegen der Langwierigkeit dieser Konditionierung, die zudem wegen der Abhängigkeit von äusseren Bedingungen zu Produkten mit schwankenden Eigenschaften führt, sind verschiedene Vorschläge gemacht worden, durch Einarbeiten bestimmter Modifikatoren die Zähigkeit von Polyamiden schon im Trockenzustand zu verbessern.

So wird in der DE-OS 2 742 176 die Schlag- und Kerbschlagzähigkeit von Polyamiden durch Zumischen von Pfropfcopolymeren von vorzugsweise (Meth)acrylsäureestern auf vernetzte Polybutadiene erhöht. Für einige Anwendungszwecke reicht jedoch die damit erzielte Zähigkeitsverbesserung, insbesondere in der Kälte nicht aus. Ausserdem besteht beim Einsatz von Pfropfcopolymerisaten, die t-Butylacrylat als Pfropfauflage aufweisen, die Gefahr, dass sich das Pfropfprodukt bei der Einarbeitung in das Polyamid zersetzt und so die Produkte aufgebläht werden.

Überraschenderweise wurde nun festgestellt, dass man eine besonders deutliche Verbesserung der Schlagzähigkeit, insbesondere in der Kälte, ohne die genannten Nachteile, beobachten kann, wenn man zur Modifizierung der Polyamide Pfropfprodukte auf Basis vernetzter Polybutadiene verwendet, die als Pfropfauflage Methylmethacrylate aufweisen. Die ausgezeichnete Verbesserung der Kerbschlagzähigkeit in der Kälte ist umso überraschender, als das als Pfropfauflage verwendete Methylmethacrylat die höchste Einfriertemperatur aufweist.

Gegenstand der Erfindung sind daher thermoplastische Formmassen aus:

I)  50–95, bevorzugt 65–95 Gew.-%, Polyamiden mit einer relativen Viskosität (gemessen an einer 1 Gew.-%igen Lösung in m-Kresol bei 25 °C) von 2,0–5,0, vorzugsweise von 2,2–4,5 und

II) 5–50, bevorzugt 5–35 Gew.-%, eines Pfropfproduktes hergestellt aus
   a) 70–95 Gew.-%, vorzugsweise 75–90 Gew.-% eines vernetzten Polymerisates aus Butadien und/oder substituiertem Butadien, das zumindest aus 95 Gew.-% ggf. substituierten Butadien-Einheiten aufgebaut ist, als Pfropfgrundlage und
   b) 5–30 Gew.-%, vorzugsweise 10–25 Gew.-% von Methylmethacrylat als aufzupfropfendes Monomeres,
   wobei der Gelanteil der Pfropfgrundlage $\geq$70%, vorzugsweise $\geq$80 Gew.-%, in Toluol gemessen, die Pfropfausbeute G$\geq$0,15, vorzugsweise $\geq$0,40 und der mittlere Teilchendurchmesser des Pfropfcopolymerisats 0,2–0,6, vorzugsweise 0,3–0,5, insbesondere ca. 0,4 µm betragen soll und die Summe aus I und II bzw. a) und b) jeweils 100 Gew.-% ergeben muss.

Als Polyamide eignen sich amorphe und teilkristalline Polyamide. So können als teilkristalline Polyamide für die erfindungsgemässen Formmassen Polyamid-6, Polyamid-6,6 und Copolymere aus diesen beiden Komponenten eingesetzt werden. Weiterhin kommen teilkrist. Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylendiamin und/oder Hexamethylendiamin und/oder 2,2,4-Trimethylhexamethylendiamin und/oder 2,4,4-Trimethylhexamethylendiamin und/oder Isophorondiamin besteht und deren Zusammensetzung aus dem Stand der Technik bekannt ist.

Ausserdem sind Polyamide zu nennen, die ganz oder teilweise aus Lactamen mit 7–12 C-Atomen, ggf. unter Mitverwendung einer oder mehrerer der oben genannten Ausgangskomponenten, hergestellt werden.

Besonders bevorzugte teilkristalline Polyamide sind Polyamid-6 und Polyamid-6,6.

Als amorphe Polyamide können die gemäss Stand der Technik bekannten Produkte eingesetzt werden. Sie werden erhalten durch Polykondensation von Diaminen wie
Ethylendiamin, Hexamethylendiamin,
Dekamethylendiamin,
2,2,4- und/oder 2,4,4-Trimethylhexamethylendiamin,
m und/oder p-Xylylendiamin,
Bis-(4-aminocyclohexyl)-methan,
Bis-(4-aminocyclohexyl)-propan,
3,3'-Dimethyl-4,4'-diamino-dicyclohexylmethan,
3-Aminomethyl-3,5,5-trimethyl-cyclohexylamin,
2,5- und/oder 2,6-Bis-(aminomethyl)-norbornan
und/oder 1,4-Diamino-methylcyclohexan
mit Dicarbonsäuren wie
Oxalsäure, Adipinsäure, Azelaninsäure,
Decandicarbonsäure, Heptadecandicarbonsäure,
2,2,4- und/oder 2,4,4-Trimethyladipinsäure,
Isophthalsäure oder Terephthalsäure.
Selbstverständlich sind auch Copolymere, die durch Polykondensation mehrerer Monomerer erhalten werden, geeignet, ferner solche Copolymere, die unter Zusatz von Aminocarbonsäuren wie
ε-Aminocapronsäure, ω-Aminoundecansäure oder ω-Aminolaurinsäure oder ihren Lactamen, hergestellt werden.

Besonders geeignete amorphe Polyamide sind die Polyamide hergestellt aus Isophthalsäure und Hexamethylendiamin; oder aus Isophthalsäure, Hexamethylendiamin und weiteren Diaminen wie 4,4'-Diaminodicyclohexylmethan, Isophorondiamin,

2,2,4- und/oder 2,4,4-Trimethylhexamethylendiamin,
2,5 und/oder 2,6-Bis-(amino-methyl)-norbornan;
oder aus
Isophthalsäure, 4,4'-Diamino-dicyclohexylmethan
und ε-Caprolactam; oder aus Isophthalsäure,
3,3'-Dimethyl-4,4'-diamino-dicyclohexylmethan
und Laurinlactam; oder aus
Terephthalsäure und dem Isomerengemisch aus
2,2,4- und/oder 2,4,4-Trimethylhexamethylendiamin.

Anstelle des reinen 4,4'-Diaminodicyclohexylmethans können auch Gemische der stellungsisomeren Diaminodicyclohexylmethane eingesetzt
werden, die sich zusammensetzen aus

70–99 Mol% des 4,4'-Diaminoisomeren

1–30 Mol% des 2,4'-Diaminoisomeren

0– 2 Mol% des 2,2'-Diaminoisomeren und

ggf. entsprechend höher kondensierten Diaminen, die durch Hydrierung von Diaminodiphenylmethan technischer Qualität erhalten werden. Die
Isophthalsäure kann bis zu 30% durch Terephthalsäure ersetzt sein.

Für die Herstellung der Pfropfprodukte können
als Pfropfgrundlage Dienkautschuke auf Basis Polybutadien und/oder Polyisopren, die bis zu
5 Gew.-% Styrol und/oder Ester der (Meth)Acrylsäure wie Methyl- oder Ethyl(meth)acrylat als Co-
Monomere enthalten können, verwendet werden.
Der Gelanteil des als Pfropfgrundlage verwendeten Polymeren sollte $\geq 70$ Gew.-%, vorzugsweise
$\geq 80$ Gew.-% (gemessen in Toluol) sein.

Die bevorzugte Pfropfgrundlage besteht aus Polybutadien.

Die erfindungsgemässen Pfropfprodukte können nach allen bekannten Polymerisationsverfahren (Emulsions-, Lösungs-, Masse-, Suspensions-,
Fällungspolymerisation), sowie nach Kombinationen aus diesen Verfahren hergestellt werden.

Zur Herstellung der Pfropfprodukte wird das
aufzupfropfende Monomere in Gegenwart der vorgebildeten Pfropfgrundlage polymerisiert. Es bildet sich dabei neben dem eigentlichen Pfropfpolymerisat auch freies Homopolymerisat. Unter
Pfropfprodukte wird die Summe der eigentlichen
Pfropfcopolymerisate und der freien Polymerisate
verstanden. Die Menge des aufgepropften Monomeren und sein Molekulargewicht kann in weiten
Grenzen durch Variation der Polymerisationsbedingungen beeinflusst werden. Hierzu gehören
vor allem: Art des Polymerisationsverfahrens,
Temperatur, Aktivatorsystem, Molekulargewichtsregler, Rührbedingungen und Art der Monomer-
Dosierung. Erfindungsgemäss sollte die Pfropfausbeute $G \geq 0,15$, vorzugsweise $G \geq 0,40$ betragen. Die Pfropfausbeute G bezeichnet das Mengenverhältnis von aufgepropftem Methacrylat zur
Gesamtmenge in der Pfropfauflage und ist dimensionslos.

Bevorzugtes Polymerisationsverfahren für die
erfindungsgemässen Pfropfpolymeren ist die
Emulsionspolymerisation.

Für die Herstellung der Pfropfprodukte durch
Emulsionspolymerisation werden vernetzte, vorzugsweise durch Emulsionspolymerisation gewonnene Butadienpolymerisate als Pfropfgrundlagen bevorzugt. Erfindungsgemäss werden bevorzugt solche Pfropfprodukte, die einen «mittleren Teilchendurchmesser» $d_{50}$ von 0,2–0,6 μ, vorzugsweise 0,3–0,5 μ, insbesondere ca. 0,4 μ verwendet. (Zur Bestimmung vgl. W. Scholtan und H.
Lange, Kolloid-Z und Z. Polymere 250 (1972)
782–796 bzw. G. Kämpf, H. Schuster, Angew. Makromolekulare Chemie 14 (1970), S. 111–129.)

Zur Herstellung der erfindungsgemässen Formmassen ist es vorteilhaft, das Pfropfmonomere in
bestimmten Mengen einzusetzen. Erfindungsgemäss sollte die Pfropfauflage vorzugsweise aus
5–30 Gew.-%, vorzugsweise 10–25 Gew.-%, insbesondere 20 Gew.-% Methylmethacrylat, bestehen.

Statt nur einer Pfropfgrundlage können auch
Abmischungen verschiedener Pfropfgrundlagen
zur Herstellung der Pfropfprodukte eingesetzt
werden. Weiterhin können statt nur eines Pfropfproduktes auch Abmischungen mehrerer erfindungsgemässer Pfropfprodukte mit unterschiedlichem Aufbau zur Abmischung mit den Polyamiden
herangezogen werden.

Die Herstellung der erfindungsgemässen Polyamid-Formmassen kann in den üblichen Mischaggregaten wie Walzen, Kneter, Ein- und Mehrwellenextruder erfolgen. Besonders geeignet sind
Doppelwellenextruder.

Die Formmassen können auf den genannten
Mischaggregaten hergestellt werden, indem die
beiden Komponenten I und II gemeinsam aufgeschmolzen und homogenisiert werden, oder indem das Pfropfprodukt II in die Schmelze des
Polyamids I eingearbeitet wird.

Die Temperatur bei der Herstellung der Formmassen sollte unterhalb 310 °C, vorzugsweise
zwischen 260 und 300 °C liegen.

Die erfindungsgemässen Formmassen zeichnen sich schon bei niedrigen Gehalten an Pfropfprodukt II durch eine erhebliche Verbesserung der
Schlagzähigkeit, insbesondere in der Kälte aus.

Ein besonderes Merkmal der erfindungsgemässen Formmassen ist die hohe Verträglichkeit der
beiden Legierungskomponenten auch bei hohen
Gehalten an Pfropfprodukt sowie die überraschend gute Verarbeitbarkeit, die sich einerseits
in einem leichten Fliessen der Schmelze und andererseits in einer hervorragenden Oberfläche
der extrudierten und verspritzten Formkörper ausdrückt.

Überraschend für die erfindungsgemässen
Formmassen ist auch die hohe Fliessnahtfestigkeit. Darüber hinaus sind die erfindungsgemässen Formmassen gekennzeichnet durch eine hervorragende Stabilität gegen thermisch-oxydative
Alterung und gegen den Einfluss von Witterungsbedingungen entsprechend dem Weather-o-
Meter-Test.

Die erfindungsgemässen Formmassen können
übliche Additive, wie Gleit- und Entformungsmittel, Nukleierungsmittel, Stabilisatoren, Flammschutzmittel sowie Farbstoffe enthalten. Die Zusatzstoffe werden vorzugsweise bei der Compoundierung in reiner Form oder als Konzentrate zugesetzt.

Werden den erfindungsgemässen Formmassen Verstärkungsstoffe, insbesondere Glasfasern zugesetzt, so beobachtet man eine unerwartet hohe Schlag- und Kerbschlagzähigkeit, insbesondere bei mehraxialer Schlagbeanspruchung.

Ein weiterer Gegenstand der Erfindung sind daher auch Formmassen, die

III: 10–60 Gew.-%, bevorzugt 15–50 Gew.-%, besonders bevorzugt 20–40 Gew.-%, bezogen auf die Gesamtformmasse, Verstärkungsmittel, insbesondere Glasfasern, enthalten.

Die Fasern weisen vorzugsweise einen Durchmesser von 8 bis 14 µm auf.

Die erfindungsgemässen Formmassen können anstelle der Glasfasern oder in Kombination mit den Glasfasern auch andere Füll- oder Verstärkungsstoffe enthalten, beispielsweise Glaskugeln, Asbest, Talkum, Kaolin, Wollastonit, Microvit, Glimmer oder Kreide.

Die Einarbeitung der Verstärkungsstoffe kann nach üblichen Methoden, vorzugsweise auf Doppelwellenextrudern, erfolgen.

Wie bereits erwähnt, zeichnen sich die verstärkten Polyamid-Formmassen durch eine unerwartet hohe Verbesserung aller Zähigkeitseigenschaften, insbesondere der Zähigkeit bei mehraxialer Schlagbeanspruchung aus, ohne dass andere mechanische Eigenschaften wie Biegefestigkeit und Steifigkeit wesentlich beeinträchtigt werden. Die verstärkten Polyamidformmassen sind daher in hervorragender Weise geeignet zur Herstellung von Formteilen, bei denen es auf eine hohe Schlagbeanspruchung ankommt, beispielsweise zur Herstellung von Gehäusen von Bohrmaschinen und Stossfängern.

Beispiele
Herstellung des Pfropfproduktes

In einem druckfesten Rührgefäss wird eine Lösung aus 80 Gew.-Teilen salzfreiem Wasser, 1,5 Gew.-Teilen Natriumsalz der disproportionierten Abietinsäure und 0,3 Gew.-Teilen Kaliumperoxidisulfat vorgelegt. Nach Verdrängen der Luft durch Stickstoff und Einstellung der Innentemperatur auf 55°C werden 0,35 Gew.-Teile Dodecylmercaptan und A Gew.-Teile Butadien zugesetzt und polymerisiert. Mit absinkender Reaktionsgeschwindigkeit bei fortschreitender Polymerisation wird die Temperatur langsam auf 68°C angehoben.

Nach beendeter Polymerisation werden geringe Mengen des nicht umgesetzten Butadiens durch Ausrühren des erhaltenen Latex unter vermindertem Druck entfernt.

175 Gew.-Teile entsalztes Wasser und 0,3 Gew.-Teile Kaliumperoxidisulfat werden zugesetzt.

Nach Verdrängen der Luft durch Stickstoff und Erwärmen auf 65°C werden 2 Gew.-Teile Emulgator (Na-Salz der disproportionierten Abietinsäure oder Alkylsulfonate), gelöst in 25 Gew.-Teilen Wasser sowie B Gew.-Teile des in Tabelle 1 angegebenen Monomeren zugesetzt.

Die Zulaufdauer beträgt ca. 4 Stunden. Zur Vervollständigung der Reaktion wird nach beendetem Zulauf noch 2 Stunden bei 54°C weiter gerührt.

Der so erhaltene Pfropfprodukt-Latex wird nach Zusatz von 1 Gew.-Teil eines phenolischen Antioxidans (2,6-Di-tert.-butyl-p-kresol) mit 2-%iger MgSO$_4$/Essigsäure-Lösung (Mischungsverhältnis 1:1 Gew.-Teile) koaguliert, das Koagulat abgetrennt, salzfrei gewaschen und bei 70°C im Vakuum getrocknet.

Die Zusammensetzung der Pfropfprodukte ist der Tabelle 1 zu entnehmen.

Tabelle 1
Zusammensetzung der Pfropfprodukte

| Nr. | Pfropfgrundlage A Gew.-Teile Butadien | Pfropfauflage B Gew.-Teile (Meth) Acrylat | Typ | mittlerer Teilchendurchmesser (µm) |
|---|---|---|---|---|
| D | 90 | 10 | MMA[1] | 0,4 |
| E | 80 | 20 | MMA[1] | 0,4 |
| F | 70 | 30 | MMA[1] | 0,4 |
| G | 80 | 20 | n-BA[2] | 0,4 |
| H | 80 | 20 | n-BMA[3] | 0,4 |
| I | 80 | 20 | n-PMA[4] | 0,4 |
| K | 80 | 20 | EMA[5] | 0,4 |

[1] Methylmethacrylat
[2] n-Butylacrylat
[3] n-Butylmethacrylat
[4] n-Propylmethacrylat
[5] Ethylmethacrylat

Beispiele 1–16
Herstellung von unverstärkten Formmassen (Beispiele 1–16)

Die Einarbeitung der Pfropfprodukte D bis K in Polyamid erfolgt in einem handelsüblichen, kontinuierlich arbeitenden Doppelwellenextruder ZSK 32 der Fa. Werner & Pfleiderer, in der das Polyamid zunächst aufgeschmolzen wurde.

Durch einen zweiten Einfüllstutzen wurde das Pfropfprodukt in die Polyamid-Schmelze eindosiert. Stickstoffbeschleierung ist zweckmässig. Das Pfropfprodukt wurde aufgeschmolzen und im Polyamid homogen verteilt. Es kann vorteilhaft sein, die Schmelze vor dem Austritt aus der Düse zu entgasen. Die Zylindertemperaturen wurden so eingestellt, dass eine Massetemperatur von 280–290°C gewährleistet war. Der Schmelzestrang der Mischung aus Polyamid und Pfropfprodukt wurde in Wasser abgekühlt, granuliert und getrocknet. Vom Granulat wurden auf einer üblichen Spritzgussmaschine bei 260°C Normkleinstäbe (nach DIN 53 453) verspritzt.

Geprüft wurde die Kerbschlagzähigkeit bei Raumtemperatur und bei −20°C bzw. −40°C (nach DIN 53 453).

Die Zusammensetzung und die Eigenschaften der Formmassen sind der Tabelle 2 zu entnehmen.

Tabelle 2

| Beispiel | Pfropfprodukt | | Polyamid | | | Kerbschlagzähigkeit (kJ/m²) | | |
|---|---|---|---|---|---|---|---|---|
| | Typ | Gew.-% | Typ | $\eta$rel[6] | Gew.-% | 20°C | −20°C | −40°C |
| 1 | E | 10 | PA–6 | 3,95 | 90 | 13,2 | 6,2 | 3,5 |
| 2 | D | 20 | PA–6 | 3,95 | 80 | 36,1 | 12,4 | 8,5 |
| 3 | E | 20 | PA–6 | 3,95 | 80 | 59,5 | 28,9 | 21,7 |
| 4 | E | 30 | PA–6 | 3,95 | 70 | 60,4 | 49,3 | 32,1 |
| 5 | E | 50 | PA–6 | 2,92 | 50 | 46,1 | 44,0 | 41,5 |
| 6 | F | 20 | PA–6 | 3,95 | 80 | 35,8 | 11,0 | 6,2 |
| 7[*] | G | 20 | PA–6 | 3,95 | 80 | 14,1 | 7,4 | 5,4 |
| 8[*] | H | 20 | PA–6 | 3,95 | 80 | 10,4 | 5,2 | 3,0 |
| 9[*] | I | 20 | PA–6 | 3,95 | 80 | 15,7 | 8,4 | 4,1 |
| 10[*] | K | 20 | PA–6 | 3,95 | 80 | 14,5 | 6,8 | 3,3 |
| 11 | E | 30 | PA–66 | 2,95 | 70 | 47,5 | 19,5 | 7,4 |
| 12 | D | 25 | IH[7] | | 75 | 46,1 | | |
| 13 | D | 15 | IH[7] | | 85 | 19,2 | | |
| 14 | E | 17 | IH[7] | | 83 | 53,5 | | |
| 15 | F | 25 | | | 75 | 46,0 | | |
| 16 | F | 15 | IH[7] | | 85 | 19,1 | | |

[6] rel-Viskosität, gemessen an einer 1%igen Lösung in m-Kresol bei 25°C in einem Ubbelohde-Viskosimeter

[7] Polyamid aus Isophthalsäure und Hexamethylendiamin

[*] Vergleichsbeispiel

Beispiele 17–19

Herstellung von verstärkten Formmassen

Auf einem Einwellenextruder (16 mm ∅, 1500 mm Länge, mit Scher- und Mischteilen) wurden Polycaprolactam, mit einer rel. Viskosität von 3,1, gemessen als 1 gew.-%ige Lösung in m-Kresol bei 25°C, und Pfropfprodukt E sowie die übliche Menge Nukleierungsmittel und Entformungsmittel mit der in der Tabelle 3 genannten Zusammensetzung bei 250–280°C aufgeschmolzen. In die Schmelze wurden Glasfasern in Form von geschnittenen Glasfasersträngen so eingearbeitet, dass die durch eine Düse in Strangform ausgepresste Mischung ca. 30 Gew.-% Glasfasern enthielt. Die Stränge wurden in einem Wasserbad abgekühlt, granuliert und getrocknet. Das Granulat wurde auf einer Spritzgussmaschine zu Prüfkörpern verarbeitet. Die Spritzlinge wurden trocken in spritzfrischem Zustand geprüft.

Zur Beurteilung der mechanischen Eigenschaften wurden Schlagzähigkeit und Kerbschlagzähigkeit (nach DIN 53 453), Schädigungsarbeit nach dem mehraxialen Schlagversuch (nach DIN 53 443) sowie Biegefestigkeit (nach DIN 53 452) bestimmt.

Erfahrungsgemäss hängt die Schlagzähigkeit bei faserverstärkten Werkstoffen stark vom Orientierungsgrad der Fasern ab. Bei den nach dem Spritzgiessverfahren hergestellten Prüfkörpern für den Schlagbiegeversuch nach DIN 53 453 sind die Glasfasern in einem hohen Mass in Fliessrichtung, d.h. parallel zur Länge des Prüfkörpers, orientiert. Die Schlagbeanspruchung erfolgt quer zur Fliessrichtung (quer zur Faserrichtung). Hier liegt die Ursache dafür, dass mit steigendem Glasfasergehalt höhere Schlagzähigkeitswerte gemessen werden. Längs zur Fliessrichtung (Faserrichtung) ist die Schlagzähigkeit aber deutlich niedriger.

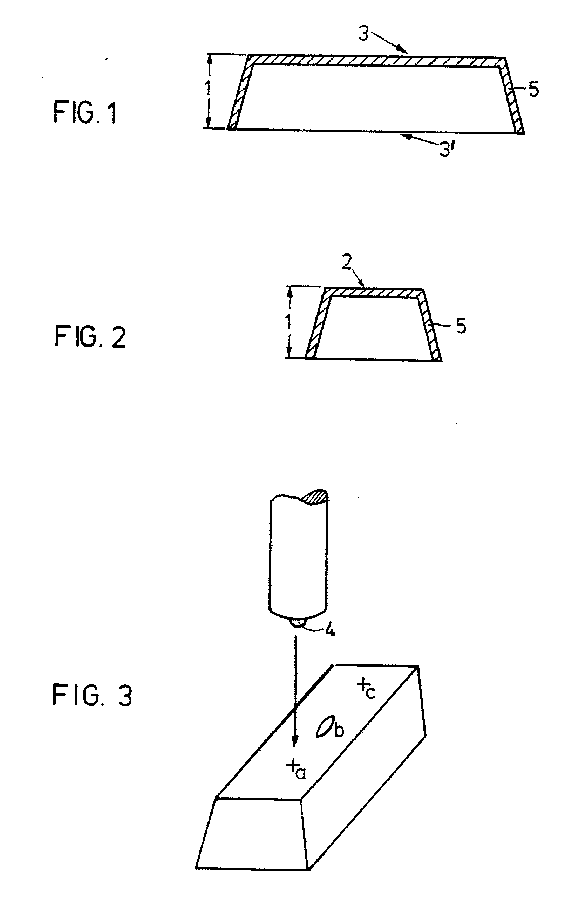

Ein richtiges Bild von der Zähigkeit der verstärkten Polyamide unter Schlagbeanspruchung liefert erfahrungsgemäss der Stoss- oder Fallbolzenversuch nach DIN 53 443, wie es in Figur 1 dargestellt ist. In dieser Figur hat die Kugel 4 einen Radius von 25 mm

a) bedeutet die Auftreffstelle der Kugel,

b) den Stangenanguss (∅ ca. 4 mm) in der Mitte der Bodenfläche und

c) eine zu a) parallele Prüfstelle.

Voraussetzung ist allerdings, dass die Prüfkörper einen möglichst geringen Orientierungsgrad aufweisen, wie beispielsweise das in den Figuren 1 und 2 dargestellte Testkästchen, das eine Höhe 1 von 40 mm, eine Breite 2 von 46,7 mm und eine Länge 3 von 106,7 mm bzw. 3′ von 120 mm und eine Wanddicke 5 von 1,5 mm aufweist.

Zusammensetzung und Eigenschaften der verstärkten Polyamidformmassen sind Tabelle 3 zu entnehmen.

Tabelle 3

| Beispiel Nr. | Pfropf-produkt E Gew.-% | Farb-stoff[8] Gew.-%[9] | Schlagzä-higkeit kJ/m² | Kerb-schlag-zähigkeit kJ/m² | Schädi-gungsar-beit am Kästchen N.m | Biegefe-stigkeit MPA |
|---|---|---|---|---|---|---|
| 17 | 3 | 0,5 | 47,7 | 10,4 | 4,9 | 223 |
| 18 | 7 | 0,5 | 52,1 | 11,0 | 5,7 | 216 |
| 19 (Vgl.-Bsp.) | 0 | 0,5 | 45,2 | 5,0 | 1,0 | 234 |

[8] Ultramarin- und Cadmium-Pigmente
[9] bezogen auf die Gesamtformmasse

## Patentansprüche

1. Thermoplastische Formmassen aus
I, 50–95 Gew.-% Polyamiden,
II, 5–50 Gew.-% eines Pfropfproduktes hergestellt aus
a) 70–95 Gew.-% eines vernetzten Polymerisates aus Butadien und/oder subst. Butadien, das zumindest aus 95 Gew.-% ggf. subst. Butadieneinheiten aufgebaut ist, als Pfropfgrundlage und
b) 5–30 Gew.-% eines Methacrylats als aufzupfropfendes Monomeres
wobei der Gelanteil der Pfropfgrundlage ≥70%, in Toluol gemessen,
die Pfropfausbeute G≥0,15 und
der mittlere Teilchendurchmesser des Pfropfcopolymerisate 0,2–0,6 μm betragen soll,
gegebenenfalls
III, 10–60 Gew.-%, bezogen auf die Gesamt-formmasse, Verstärkungsstoffe und gegebenen-falls
IV, übliche Hilfs- und Zuschlagsstoffe, wobei die Summe aus I und II, bzw. a) und b) immer 100 Gew.-% betragen muss, dadurch gekennzeichnet, dass die Komponente b, Methylmethacrylat ist.

2. Formmassen nach Anspruch 1 enthaltend 65–95 Gew.-% der Komponente I und 5–35 Gew.-% der Komponente II.

3. Formmassen nach Ansprüchen 1–2, dadurch gekennzeichnet, dass die Komponente II aus 75–90 Gew.-% der Komponente a) und 10–25 Gew.-% der Komponente b) hergestellt wurde.

4. Formmassen nach Ansprüchen 1–3, dadurch gekennzeichnet, dass die Komponente a) Polybutadien ist.

5. Formmassen nach Ansprüchen 1–4, dadurch gekennzeichnet, dass sie mit Glasfasern verstärkt sind.

## Claims

1. Thermoplastic moulding composition of
I, 50–95% by weight of polyamides,
II, 5–50% by weight of a graft product produced from
a) 70–95% by weight of a cross-linked polymer of butadiene and/or subst. butadiene, which is composed of at least 95% by weight of optionally subst. butadiene units, as the graft substrate and
b) 5–30% by weight of a methacrylate as the monomer to be grafted on, wherein the gel content of the graft substrate should be ≥70%, measured in toluene, the graft yield G should be ≥0.15 and the average particle diameter of the graft copolymer should be 0.2–0.6 μm, optionally
III, 10–60% by weight, based on the total moulding composition, of reinforcing materials and, optionally,
IV, customary auxiliaries and additives,
wherein the sum of I and II, and a) and b) respectively, must always be 100% by weight, characterised in that the component b is methyl methacrylate.

2. Moulding compositions according to Claim 1, containing 65–95% by weight of component I and 5–35% by weight of component II.

3. Moulding compositions according to Claims 1–2, characterised in that component II has been produced from 75–90% by weight of component a) and 10–25% by weight of component b).

4. Moulding compositions according to Claims 1–3, characterised in that the component a) is polybutadiene.

5. Moulding compositions according to Claims 1–4, characterised in that they are reinforced with glass fibres.

## Revendications

1. Matières à mouler thermoplastiques de:
I 50 à 95% en poids de polyamides;
II 5 à 50% en poids d'un produit greffé fabriqué à partir de
a) 70 à 95% en poids d'un polymère réticulé de butadiène et/ou de butadiène substitué, qui est constitué d'au moins 95% en poids de motifs butadiène éventuellement substitué, comme support de greffage et,
b) 5 à 30% en poids d'un méthacrylate comme monomère à greffer,
la fraction de gel du support de greffage devant être ≥70%, mesurée dans le toluène,
le rendement de greffage G ≥0,15 et
le diamètre moyen de particules du copolymère greffé de 0,2 à 0,6 μm,
éventuellement

III 10 à 60% en poids, par rapport à la matière à mouler totale, de substances de renforcement et éventuellement

IV des agents auxiliaires et additifs habituels, la somme de I et II ou de a) et b) devant toujours être de 100% en poids, caractérisées en ce que le composant b) est le méthacrylate de méthyle.

2. Matières à mouler selon la revendication 1, contenant 65 à 95% en poids du composant I et 5 à 35% en poids du composant II.

3. Matières à mouler selon les revendications 1 et 2, caractérisées en ce que le composant II a été préparé à partir de 75 à 90% en poids du composant a) et 10 à 25% en poids du composant b).

4. Matières à mouler selon les revendications 1 à 3, caractérisées en ce que le composant a) est le polybutadiène.

5. Matières à mouler selon les revendications 1 à 4, caractérisées en ce qu'elles sont renforcées par des fibres de verre.

FIG. 1

FIG. 2

FIG. 3